# EUROPEAN PATENT APPLICATION

(11) **EP 4 294 103 A1**
(43) Date of publication of application: **20.12.2023**
(21) Application number: 21942339.9
(22) Date of filing: 27.05.2021
(51) Int. Cl.: H04W 74/00

(54) **BEAM FAILURE RECOVERY METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN)
(74) Representative: Mewburn Ellis LLP
(86) International application number: PCT/CN2021/096516
(87) International publication number: WO 2022/246763

(57) **Abstract**

A beam failure recovery (BFR) method, a terminal device, and a network device are provided. The method includes the following. If beam failure occurs for a transmit receive point (TRP) in a serving cell, a terminal device initiates a random access procedure, where the random access procedure is used for beam recovery for the TRP. The problem of TRP BFR in the serving cell can be solved in embodiments of the disclosure.

## Description

### TECHNICAL FIELD

This disclosure relates to the field of communication, and more specifically to a beam failure recovery (BFR) method, a terminal device, and a network device.

### BACKGROUND

In New Radio (NR) release-15 (Rel-15), a beam failure recovery (BFR) procedure is standardized for a primary cell (PCell) or a primary secondary cell (PSCell). The PCell and the PSCell are collectively referred to as a special cell (SpCell). A user equipment (UE) can notify a base station via random access (RA) which downlink transmit-beam to use to transmit a random access response (RAR), so as to perform downlink beam recovery.

In Rel-16, the BFR procedure for a secondary cell (SCell) is introduced. The UE reports, by reporting a BFR media access control (MAC) control element (CE), to the network side that beam failure occurs for the SCell. Therefore, for a serving cell such as the PCell, how to handle transmit receive point (TRP) BFR is a problem to be solved at present.

### SUMMARY

Embodiments of the disclosure provide a beam failure recovery (BFR) method, a terminal device, and a network device, which can implement BFR in case of transmit receive point (TRP) BFR in a serving cell.

Embodiments of the disclosure propose a BFR method. The method includes the following. If beam failure occurs for a TRP in a serving cell, a terminal device initiates a random access procedure, where the random access procedure is used for beam recovery for the TRP.

Embodiments of the disclosure further propose a BFR method. The method includes the following. If beam failure occurs for a TRP in a serving cell, a terminal device transmits a BFR media access control (MAC) control element (CE), where the BFR MAC CE is used for beam recovery for the TRP.

Embodiments of the disclosure further propose a BFR method. The method includes the following. A network device receives a random access signal from a terminal device, where the random access signal is used for beam recovery for a TRP for which beam failure occurs in a serving cell. The network device determines, according to the random access signal, a serving cell and/or a TRP for which TRP beam failure occurs.

Embodiments of the disclosure further propose a BFR method. The method includes the following. A network device receives a BFR MAC CE from a terminal device, where the BFR MAC CE is used for beam recovery for a TRP in a serving cell for which beam failure occurs. The network device determines, according to the BFR MAC CE, a serving cell and/or a TRP for which TRP beam failure occurs.

Embodiments of the disclosure further propose a terminal device. The terminal device includes a random access module. The random access module is configured to initiate a random access procedure if beam failure occurs for a TRP in a serving cell, where the random access procedure is used for beam recovery for the TRP.

Embodiments of the disclosure further propose a terminal device. The terminal device includes a transmitting module. The transmitting module is configured to transmit a BFR MAC CE if beam failure occurs for a TRP in a serving cell, where the BFR MAC CE is used for beam recovery for the TRP.

Embodiments of the disclosure further propose a network device. The network device includes a first receiving module and a first determining module. The first receiving module is configured to receive a random access signal from a terminal device, where the random access signal is used for beam recovery for a TRP in a serving cell for which beam failure occurs. The first determining module is configured to determine, according to the random access signal, a serving cell and/or a TRP for which TRP beam failure occurs.

Embodiments of the disclosure further propose a network device. The network device includes a second receiving module and a second determining module. The second receiving module is configured to receive a BFR MAC CE from a terminal device, where the BFR MAC CE is used for beam recovery for a TRP in a serving cell for which beam failure occurs. The second determining module is configured to determine, according to the BFR MAC CE, a serving cell and/or a TRP for which TRP beam failure occurs.

Embodiments of the disclosure further propose a terminal device. The terminal device includes a processor and a memory. The memory is configured to store computer programs, and the processor is configured to invoke and execute the computer programs stored in the memory, to perform the method of any of the foregoing embodiments.

Embodiments of the disclosure further propose a network device. The network device includes a processor and a memory. The memory is configured to store computer programs, and the processor is configured to invoke and execute the computer programs stored in the memory, to perform the method of any of the foregoing embodiments.

Embodiments of the disclosure further propose a chip. The chip includes a processor. The processor is configured to invoke and execute computer programs stored in a memory, to cause a device equipped with the chip to perform the method of any of the foregoing embodiments.

Embodiments of the disclosure further propose a computer-readable storage medium. The computer-readable storage medium is configured to store computer programs which are operable with a computer to perform the method of any of the foregoing embodiments.

Embodiments of the disclosure further propose a computer program product. The computer program product includes computer program instructions which are operable with a computer to perform the method of any of the foregoing embodiments.

Embodiments of the disclosure further propose a computer program which is operable with a computer to perform the method of any of the foregoing embodiments.

In embodiments of the disclosure, in case of TRP BFR in the serving cell, the terminal device initiates the random access procedure to perform beam recovery for the TRP for which beam failure occurs, thereby solving the problem of a BFR for the serving cell (serving cell BFR).

### BRIEF DESCRIPTION OF THE DRAWINGS

FIG. 1 is a schematic diagram illustrating an application scenario of embodiments of the disclosure.
FIG. 2 is a schematic flowchart of a BFR method 200 according to embodiments of the disclosure.
FIG. 3 is a schematic flowchart of a BFR method 300 according to embodiments of the disclosure.
FIG. 4 is a schematic flowchart of a BFR method 400 according to embodiments of the disclosure.
FIG. 5 is a schematic flowchart of a BFR method 500 according to embodiments of the disclosure.
FIG. 6 is a schematic structural diagram of a terminal device 600 according to embodiments of the disclosure.
FIG. 7 is a schematic structural diagram of a terminal device 700 according to embodiments of the disclosure.
FIG. 8 is a schematic structural diagram of a terminal device 800 according to embodiments of the disclosure.
FIG. 9 is a schematic structural diagram of a terminal device 900 according to embodiments of the disclosure.
FIG. 10 is a schematic structural diagram of a network device 1000 according to embodiments of the disclosure.
FIG. 11 is a schematic structural diagram of a network device 1100 according to embodiments of the disclosure.
FIG. 12 is a schematic structural diagram of a communication device 1200 according to embodiments of the disclosure.
FIG. 13 is a schematic structural diagram of a chip 1300 according to embodiments of the disclosure.

### DETAILED DESCRIPTION

The following will describe technical solutions of embodiments of the disclosure with reference to the accompanying drawings in embodiments of the disclosure.

It is to be noted that, the terms "first", "second", and the like used in the specification, the claims, and the accompanying drawings of embodiments of the disclosure are used to distinguish similar objects rather than describe a particular order or a precedence order. In addition, the terms "first" and "second" may describe same or different objects.

Technical solutions of embodiments of the disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a universal mobile telecommunication system (UMTS), a wireless local area network (WLAN), a wireless fidelity (Wi-Fi), a 5th generation (5G) system, or other communication systems.

Generally speaking, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), and vehicle to vehicle (V2V) communication, etc. Embodiments of the disclosure can also be applied to these communication systems.

Optionally, a communication system in embodiments of the disclosure may be applied to a carrier aggregation (CA) scenario, a dual connectivity (DC) scenario, or a standalone (SA) network deployment scenario.

There is no limitation on the spectrum where embodiments of the disclosure are applied. For example, embodiments of the disclosure may be applied to a licensed spectrum, or may be applied to an unlicensed spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc. The terminal device may be a station (ST) in a WLAN, a cellular radio telephone, a cordless telephone, a session initiation protocol (SIP) telephone, a wireless local loop (WLL) station, a personal digital assistant (PDA), a handheld device, a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

The network device may be a device configured to communicate with a mobile device, and the network device may be an access point (AP) in a WLAN, a base transceiver station (BTS) in GSM or CDMA, may also be a Node B (NB) in WCDMA, and may also be an evolutional Node B (eNB or eNodeB) in LTE, or a relay station or an AP, or an in-vehicle device, a wearable device, a network device in an NR network (gNB), or a network device in a future evolved PLMN, etc.

In embodiments of the disclosure, the network device provides services for a cell, and the terminal device communicates with the network device on a transmission resource (for example, a frequency-domain resource or a spectrum resource) for the cell. The cell may be a cell corresponding to the network device (for example, a base station). The cell may correspond to a macro base station, or may correspond to a base station corresponding to a small cell. The small cell herein may include: a metro cell, a micro cell, a pico cell, a femto cell, and the like. These small cells are characterized by small coverage and low transmission power and are adapted to provide data transmission service with high-rate.

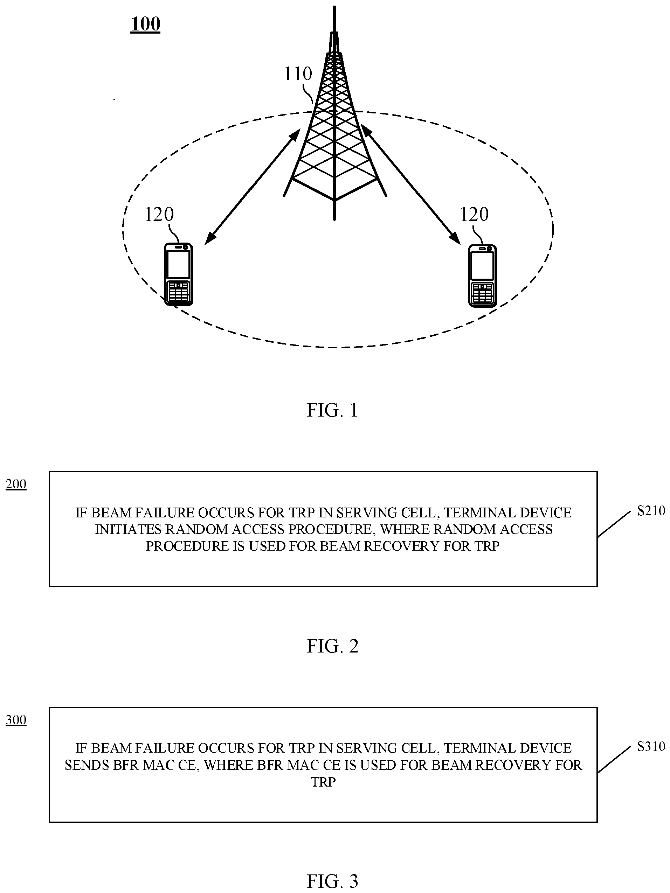

FIG. 1 exemplarily illustrates one network device 110 and two terminal devices 120. Optionally, a wireless communication system 100 may include multiple network devices 110, and there can be other quantities of terminal devices 120 in a coverage area of each of the network devices 110. Embodiments of the disclosure are not limited in this regard. Embodiments of the disclosure may be applied to one terminal device 120 and one network device 110, or may also be applied to one terminal device 120 and another terminal device 120.

Optionally, the wireless communication system 100 may further include other network entities such as a mobility management entity (MME), an access and mobility management function (AMF), or the like, and embodiments of the disclosure are not limited in this regard.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the elaboration of embodiments of the disclosure, the term "correspondence" may mean that there is a direct or indirect correspondence between the two, may mean that there is an association between the two, or may mean a relationship of indicating and indicated or configuring and configured, etc.

For better understanding of technical solutions of embodiments of the disclosure, the related art will be elaborated first. The related art below, as an optional scheme, can be arbitrarily combined with the technical solutions of embodiments of the disclosure, which shall all belong to the protection scope of embodiments of the disclosure.

In R-15, beam failure recovery (BFR) for a primary cell (PCell) is completed through a random access procedure. For PCell or primary secondary cell (PSCell), the UE can notify the base station via random access (RA) which downlink transmit-beam to use to transmit a random access response (RAR), so as to perform downlink beam recovery. A random access preamble of new radio (NR) RA is configured for each synchronization signal block (SSB). By comparing reference signal receiving power (RSRP), the UE first selects the SSB/channel state information-reference signal index (CSI-RS index) that meets the threshold, and uses the corresponding preamble on the SSB and physical random access channel (PRACH) resources to send message 1 (Msg1). There is a correspondence between an SSB and a channel state information-reference signal (CSI-RS). That is to say, upon reception of the preamble, the base station (gNB) knows which SSB to use to feed back RAR.

The overall BFR procedure includes the following operations.
1. Beam failure detection: by measuring the CSI-RS and/or SS/PBCH block, a physical (PHY) layer of the UE determines whether the quality of the corresponding physical downlink control channel (PDCCH) reaches the predefined/configured threshold, for example, assuming (hypothetical BLER performance is worse than the threshold). If beam failure is detected, a beam failure instance (BFI) is reported to a media access control (MAC) layer. For an MAC entity, whenever a BFI is reported by the PHY layer, the UE may increment BFI_COUNTER by 1 and restart a beam failure detection timer *(beamFailureDetectionTimer).* If the BFI_COUNTER reaches the maximum count while *beamFailureDetectionTimer* is running, the UE determines that beam failure occurs, and initiates a random access procedure.
2. New candidate beam identification: the UE selects through CSI-RS and/or SSB (SS/PBCH block) a new beam that reaches the predefined/configured threshold.
3. If the UE fails to select any new beam meeting the condition, a contention-based random access procedure is adopted.
4. Beam failure recovery request transmission: if a new beam meeting the condition is selected, the UE selects the PRACH corresponding to the new beam to initiate a transmission or reports the selected new beam through a physical uplink control channel (PUCCH).
5. The UE monitors gNB response for beam failure recovery request.

BFR for secondary cell (SCell) is introduced in R-16, and the UE indicates beam failure on this SCell by reporting a BFR MAC control element (CE). Then, how to handle transmit receive point (TRP) BFR in a serving cell (e.g., the PCell) is a problem to be solved at present.

A BFR method is proposed in embodiments of the disclosure. FIG. 2 is a schematic flowchart of a BFR method 200 according to embodiments of the disclosure. Optionally, the BFR method 200 is applicable to the system illustrated in FIG. 1, but is not limited thereto. The BFR method 200 includes at least some of the following contents.

S210, if beam failure occurs for a TRP in a serving cell, a terminal device initiates a random access procedure, where the random access procedure is used for beam recovery for the TRP.

The serving cell above may include a PCell, a PSCell, or an SCell.

The beam above may be represented as an SSB, a CSI-RS, or a sounding reference signal (SRS), etc. The disclosure is not limited in this regard.

The BFR method proposed in this embodiment includes, at least, the following modes.

### Mode 1

If a random access resource for TRP BFR has been configured for a first TRP corresponding to the serving cell by a network device corresponding to the serving cell and beam failure occurs for the first TRP, the terminal device initiates the random access procedure using a random access resource corresponding to the first TRP.

In this mode, the random access resource for TRP BFR is configured for at least one TRP corresponding to the serving cell by the network device.

Alternatively, if a random access resource for TRP BFR has been configured for a first TRP corresponding to the serving cell and a second TRP corresponding to the serving cell by a network device corresponding to the serving cell and beam failure occurs for both the first TRP and the second TRP, the terminal device initiates the random access procedure using a random access resource corresponding to the first TRP or using a random access resource corresponding to the second TRP.

Assuming that the serving cell has two TRPs, including the first TRP and the second TRP, the network device can configure for the serving cell two sets of random access resources (e.g., random access channel (RACH) resources) to distinguish between the first TRP and the second TRP.

The above random access resources corresponding to different TRPs configured with different random access resources may be differentiated according to one of: different random access preambles; different RACH occasions/different time-frequency resources; different configured beams; or different configured SSBs.

If beam failure occurs for one of the TRPs, the UE performs the random access procedure using the random access resource corresponding to the TRP for which beam failure occurs. Based on the random access resource used by the UE, the network device can determine which TRP has beam failure and then can switch the beam corresponding to the TRP.

If beam failure occurs for at least two TRPs configured with corresponding random access resources, the UE may perform the random access procedure with any one of random access resources, so as to notify the network device that beam failure occurs for a TRP in the serving cell.

Alternatively, if beam failure occurs for at least two TRPs, even though corresponding random access resources are configured for the at least two TRPs by the network side, the UE may use other modes rather than use any one of random access resources, for example, performing a contention-based random access procedure so as to notify the network device that beam failure occurs for the TRP in the serving cell. In addition, Msg3/MsgA in the contention-based random access procedure carries indication information, where the indication information indicates information on the TRP for which beam failure occurs. For example, if beam failure occurs for the first TRP and the second TRP in the serving cell, the terminal device may carry indication information in Msg3/MsgA in the contention-based random access procedure, where the indication information indicates first TRP information and/or second TRP information. The foregoing TRP information may include information, such as TRP identification or an indication for all TRPs in the serving cell.

The indication information above may be carried in the MAC CE or the radio resource control (RRC) messages.

Optionally, the indication information above may include at least one of: serving cell information, e.g., serving cell ID; information on the TRP for which beam failure occurs; information on whether there is an available beam; or information on the available beam.

The above information on the TRP for which beam failure occurs may include an ID of the TRP for which beam failure occurs or include an indication for all TRPs in the serving cell.

The available beam above may refer to the beam that reaches the preconfigured RSRP threshold.

The information on the available beam includes at least one of: identification of the available beam; an SSB index corresponding to the available beam; or a CSI-RS index corresponding to the available beam.

### Mode 2

If a random access resource for cell BFR has been configured for the serving cell, when beam failure occurs, the terminal device performs the random access procedure for BFR for the serving cell (serving cell BFR) using the random access resource for cell BFR.

Further, the terminal device may carry indication information in Msg3/MsgA in the random access procedure for serving cell BFR, where the indication information indicates TRP information corresponding to a network device corresponding to the serving cell.

This mode is applicable to the scenario where a random access resource for TRP BFR is not configured for the TRP corresponding to the serving cell by a network device corresponding to the serving cell. Even if the random access resource for TRP BFR has been configured, the terminal device can still use this mode for BFR.

Taking the serving cell as the PCell for example, if a random access resource for PCell BFR has been configured for the PCell, the UE may trigger a random access procedure for PCell BFR by using the random access resource. Further, the UE may carry the indication information above in Msg3/MsgA in the random access procedure.

The indication information above may be carried in the MAC CE or the RRC messages.

Optionally, the indication information above may include at least one of: serving cell information, e.g., serving cell ID; information on the TRP for which beam failure occurs; information on whether there is an available beam; or information on the available beam.

This mode is applicable to the scenario where beam failure occurs for one TRP and the scenario where beam failure occurs for at least two TRPs. If beam failure occurs for one TRP, beam failure information may include an ID of the TRP for which beam failure occurs. If beam failure occurs for at least two TRPs, beam failure information may include the IDs of all TRPs for which beam failure occurs, or include an indication that beam failure occurs for at least two TRPs.

The available beam above may refer to the beam that reaches the preconfigured RSRP threshold.

The information on the available beam includes at least one of: identification of the available beam; an SSB index corresponding to the available beam; or a CSI-RS index corresponding to the available beam.

Based on the received beam failure information, the network device can determine which cell/TRP has beam failure and then can switch the available beam.

### Mode 3

When beam failure occurs, the terminal device initiates a contention-based random access procedure and carries indication information in Msg3/MsgA in the contention-based random access procedure, where the indication information indicates TRP information corresponding to a network device corresponding to the serving cell.

This mode is applicable to the scenario where a random access resource for TRP BFR is not configured for the TRP corresponding to the serving cell by the network device corresponding to the serving cell, and/or the scenario where no random access resource for cell BFR is configured for the serving cell. Even if the foregoing random access resource has been configured, the terminal device can still use this mode for BFR.

The indication information above may be carried in the MAC CE or the RRC messages.

Optionally, the indication information above may include at least one of: serving cell information, e.g., serving cell ID; information on the TRP for which beam failure occurs; information on whether there is an available beam; or information on the available beam

This mode is applicable to the scenario where beam failure occurs for one TRP or the scenario where beam failure occurs for at least two TRPs. If beam failure occurs for one TRP, beam failure information may include an ID of the TRP for which beam failure occurs. If beam failure occurs for at least two TRPs, beam failure information may include the IDs of all TRPs for which beam failure occurs, or include an indication that beam failure occurs for at least two TRPs.

The available beam above may refer to the beam that reaches the preconfigured RSRP threshold.

The information on the available beam includes at least one of: identification of the available beam; an SSB index corresponding to the available beam; or a CSI-RS index corresponding to the available beam.

Based on the received beam failure information, the network device can determine which cell/TRP has beam failure and then can switch the available beam.

In the modes described above, the TRP in the serving cell may be represented by a control resource set (CORESET), a CORESET pool, or a reference signal set. This disclosure is not limited in this regard.

In the modes described above, a random access may include a two-step random access or a four-step random access.

Furthermore, in the modes described above, prior to beam failure, the terminal device can make a beam failure judgment based on a beam failure indication reported by the PHY layer. For example, when the number of the BFI on the TPR reaches the *beamFailurelnstanceMaxCount* during running of *beamFailureDetectionTimer,* the terminal device declares beam failure for TRP.

The modes above can be used alone or in combination.

For example, the serving cell has multiple TRPs, and random access resources for TRP BFR have been configured for some TRPs corresponding to the serving cell by the network device corresponding to the serving cell. When beam failure occurs for a TRP configured with a random access resource, the terminal device can initiate a random access procedure for beam recovery for the TRP using the random access resource corresponding to the TRP. If no random access resource is configured for the TRP for which beam failure occurs, the terminal device can initiate a random access procedure by using the random access resource for cell BFR configured for the serving cell, or initiate a contention-based random access procedure, and carry indication information in Msg3/MsgA in the random access procedure, where the indication information indicates information on the TRP for which beam failure occurs. If beam failure occurs for at least two TRPs, and among the at least two TRPs having beam failure, some TRPs have been configured with random access resources while other TRPs are not configured with random access resources, the terminal device can also initiate a random access procedure by using the random access resource for cell BFR configured for the serving cell, or initiate a contention-based random access procedure, and carry indication information in Msg3/MsgA in the random access procedure, where the indication information indicates information on the TRP for which beam failure occurs.

Another BFR method is proposed in embodiments of the disclosure. FIG. 3 is a schematic flowchart of a BFR method 300 according to embodiments of the disclosure. Optionally, the BFR method 300 is applicable to the system illustrated in FIG. 1, but is not limited thereto. The BFR method 300 includes at least some of the following contents.

S310, if beam failure occurs for a TRP in a serving cell, a terminal device transmits a BFR MAC CE, where the BFR MAC CE is used for beam recovery for the TRP.

This method is applicable to the scenario where a random access resource for TRP BFR is not configured for the TRP corresponding to the serving cell by a network device corresponding to the serving cell and/or the scenario where no random access resource for cell BFR is configured for the serving cell. However, even if the foregoing random access resource has been configured, the terminal device can still use this method for BFR.

Optionally, the terminal device can transmit the BFR MAC CE for the TRP for which beam failure occurs.

In some embodiments, the BFR MAC CE above carries indication information, where the indication information indicates TRP information corresponding to the network device corresponding to the serving cell.

Optionally, the BFR MAC CE above may include at least one of: serving cell information, e.g., serving cell ID; information on the TRP for which beam failure occurs; information on whether there is an available beam; or information on the available beam

This method is applicable to the scenario where beam failure occurs for one TRP or the scenario where beam failure occurs for at least two TRPs. If beam failure occurs for one TRP, beam failure information may include an ID of the TRP for which beam failure occurs. If beam failure occurs for at least two TRPs, beam failure information may include the IDs of all TRPs for which beam failure occurs, or include an indication that beam failure occurs for at least two TRPs.

The available beam above may refer to the beam that reaches the preconfigured RSRP threshold.

The information on the available beam includes at least one of: identification of the available beam; an SSB index corresponding to the available beam; or a CSI-RS index corresponding to the available beam.

Based on the received BFR MAC CE, the network device can determine which cell/TRP has beam failure and then can switch the available beam.

In the modes described above, the TRP in the serving cell may be represented by a CORESET, a CORESET pool, or a reference signal set. This disclosure is not limited in this regard.

Furthermore, in the modes described above, prior to beam failure, the terminal device can make a beam failure judgment based on a beam failure indication reported by the PHY layer. For example, when the number of the BFI on the TPR reaches the *beamFailurelnstanceMaxCount* during running of *beamFailureDetectionTimer,* the terminal device declares beam failure for TRP.

Another BFR method is proposed in embodiments of the disclosure. In a case where a TRP has been configured for the serving cell and one of the TRPs has beam failure, the terminal device sends a scheduling request (SR) by using an SR resource corresponding to the TRP having beam failure; or the terminal device sends the SR using the SR resource corresponding to the TRP without beam failure.

Further, upon beam failure, the terminal sends the SR, further including at least one of the following: no available uplink resource to transmit the corresponding beam failure information currently; no available uplink resource on the current TRP to transmit the corresponding beam failure information; no available uplink resource on the TRP without beam failure to transmit the corresponding beam failure information; or an indication that a random access resource for TRP BFR (TRP level random access resource) is not configured for the TRP corresponding to the serving cell by the network device corresponding to the serving cell, and/or that no random access resource for cell BFR (cell level random access resource) is configured for the serving cell.

The SR is one-bit indication information, which is associated with a PUCCH resource and indicates to a network layer whether there is an available uplink resource. The network can configure for two TRPs in the serving cell corresponding SR resources.

In this way, upon reception of the SR, the network device can determine based on a presetting that beam failure occurs for the TRP corresponding to the SR resource for sending the SR or for another TRP.

For example, the network configures for the serving cell two TRPs, including a first TRP and a second TRP, and configures the SR resource for sending the SR, including a first SR resource and a second SR resource. There is a correspondence between the first SR resource and the first TRP, and between the second SR resource and the second TRP.

When detecting that the first TRP has beam failure, the terminal device sends an SR by using the first SR resource. Upon reception of the SR, the network device determines based on the first SR resource that the first TRP has beam failure, and then can switch the beam corresponding to the first TRP.

Alternatively, when detecting that the first TRP has beam failure, the terminal device sends an SR by using the second SR resource. Upon reception of the SR, the network device determines based on the second SR resource that the first TRP has beam failure, and then can switch the beam corresponding to the first TRP.

Optionally, the serving cell above includes a PCell, a PSCell, or an SCell.

Furthermore, in some embodiments, prior to beam failure, the terminal device makes a beam failure judgment based on a beam failure indication reported by the PHY layer. For example, when the number of the BFI on the TPR reaches the *beamFailurelnstanceMaxCount* during running of *beamFailureDetectionTimer,* the terminal device declares TRP beam failure.

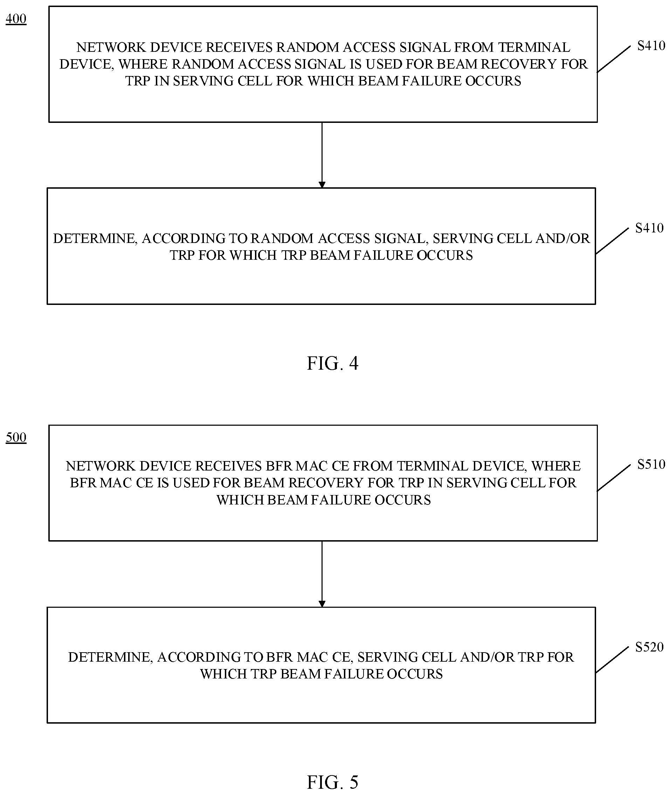

Corresponding to the first BFR method described above, another BFR method is proposed in embodiments of the disclosure. FIG. 4 is a schematic flowchart of a BFR method 400 according to embodiments of the disclosure. Optionally, the BFR method 400 is applicable to the system illustrated in FIG. 1, but is not limited thereto. The BFR method 400 includes at least some of the following contents.

S410, a network device receives a random access signal from a terminal device, where the random access signal is used for beam recovery for a TRP in a serving cell for which beam failure occurs.

S420, determine, according to the random access signal, a serving cell and/or a TRP for which TRP beam failure occurs.

Optionally, the serving cell above includes a PCell, a PSCell, or an SCell.

Optionally, the network device can determine, according to a TRP corresponding to a random access resource used by the random access signal, the TRP for which beam failure occurs.

In some embodiments, the network device can pre-configure random access resources (e.g., RACH resources) corresponding to different TRPs. When finding that a TRP in the serving cell has beam failure, the terminal device initiates a random access procedure by using the random access resource corresponding to the TRP, and based on the random access resource, the network device can determine which TRP has beam failure and then can switch the beam corresponding to TRP.

Assuming that two TRPs are configured, including a first TRP and a second TRP, the network side can configure two sets of random access resources (e.g., RACH resources) for distinguishing the first TRP from the second TRP.

The above random access resources corresponding to different TRPs configured with different random access resources may be differentiated according to one of: different random access preambles; different RACH occasions/different time-frequency resources; different configured beams; or different configured SSBs.

If beam failure occurs for one of the TRPs, the UE performs the random access procedure using the random access resource corresponding to the TRP for which beam failure occurs. Based on the random access resource used by the UE, the network device can determine which TRP has beam failure and then can switch the beam corresponding to the TRP.

Alternatively, if beam failure occurs for at least two TRPs in the serving cell, the UE may initiate the random access procedure with any one of random access resources, so as to notify the network device that beam failure occurs for a TRP in the serving cell. Upon reception of the random access signal carried in the random access resource corresponding to any one of the TRPs, the network device determines based on a presetting that beam failure occurs for the TRP in the serving cell.

In some embodiments, the network device determines, according to indication information carried in the random access signal, the serving cell and/or the TRP for which beam failure occurs, where the indication information indicates TRP information corresponding to a network device corresponding to the serving cell.

Optionally, the indication information above may be carried in the MAC CE or the RRC messages.

Optionally, the indication information above includes at least one of: serving cell information; information on the TRP for which beam failure occurs; information on whether there is an available beam; or information on the available beam.

Optionally, the information on the available beam above includes at least one of: identification of the available beam; an SSB index corresponding to the available beam; or a CSI-RS index corresponding to the available beam.

Optionally, the TRP in the serving cell above is represented by a CORESET, a CORESET pool, or a reference signal set.

Optionally, the random access above includes a two-step random access or a four-step random access.

Corresponding to the second BFR method described above, another BFR method is proposed in embodiments of the disclosure. FIG. 5 is a schematic flowchart of a BFR method 500 according to embodiments of the disclosure. Optionally, the BFR method 500 is applicable to the system illustrated in FIG. 1, but is not limited thereto.

S510, a network device receives a BFR MAC CE from a terminal device, where the BFR MAC CE is used for beam recovery for a TRP in a serving cell for which beam failure occurs.

S520, determine, according to the BFR MAC CE, a serving cell and/or a TRP for which TRP beam failure occurs.

Optionally, the BFR MAC CE above carries indication information, where the indication information indicates TRP information corresponding to the network device corresponding to the serving cell.

Optionally, the BFR MAC CE above includes at least one of: serving cell information; information on the TRP for which beam failure occurs; information on whether there is an available beam; or information on the available beam.

Optionally, the information on the available beam above includes at least one of: identification of the available beam; an SSB index corresponding to the available beam; or a CSI-RS index corresponding to the available beam.

Optionally, the serving cell above includes a PCell, a PSCell, or an SCell.

Optionally, the TRP in the serving cell above is represented by a CORESET, a CORESET pool, or a reference signal set.

Corresponding to the third BFR method described above, another BFR method is proposed in embodiments of the disclosure. The method includes the following operations.

A network device receives an SR from a terminal device and determines, according to a TRP corresponding to an SR resource carrying the SR, a TRP in a serving cell for which beam failure occurs.

The network can configure for two TRPs in the serving cell corresponding SR resources. Based on the pre-configuration, when detecting that beam failure occurs for a TRP, the terminal device sends the SR by using the SR resource corresponding to the TRP or by using another SR resource. Upon reception of the SR, the network device can determine based on a presetting that beam failure occurs for the TRP corresponding to the SR resource for sending the SR or for another TRP.

Optionally, the serving cell above includes a PCell, a PSCell, or an SCell.

Methods of handling the scenario where TRP BFR occurs in the serving cell is disclosed as above. Based on the above methods, the following embodiments are proposed.

### Embodiment 1

In this embodiment, the MAC layer performs beam failure detection per TRP.

If beam failure instance indication has been received from a lower layer, start or restart the *beamFailureDetectionTimer* and increment *BFI_COUNTER* by 1.

If *BFI_COUNTER* is greater than or equal to *beamFailurelnstanceMaxCount,* perform the following operations:
1) if the current Serving Cell/current cell (CC) has only one TRP:
   if the Serving Cell is SCell, the terminal device transmits a BFR MAC CE for the SCell (triggers a BFR for this Serving Cell);
   else:
   the terminal device initiates a Random Access procedure on the SpCell.
2) if the current Serving Cell/CC is configured with two TRPs:
   if the Serving Cell is SCell, the terminal device transmits a BFR MAC CE for the TRP having beam failure (triggers a BFR for this Serving Cell);
   else:
   the terminal device initiates a Random Access procedure for this TRP having beam failure on the SpCell.

As can be seen, when two TRPs have been configured for the serving cell, for SCell, the BFR method proposed in R-16 is used in this embodiment, i.e., initiate a BFR by using the BFR MAC CE. For PCell or PSCell, in this embodiment, a BFR is initiated by using the random access procedure or BFR MAC CE.

The random access procedure or BFR MAC CE may carry at least one of information on the serving cell for which beam failure occurs, information on the TRP for which beam failure occurs, information on whether there is an available beam, or information on the available beam, so as to notify the network device which cell and/or TRP have beam failure.

### Embodiment 2

In this embodiment, the MAC layer performs beam failure detection per TRP.

If beam failure instance indication has been received from a lower layer, start or restart the *beamFailureDetectionTimer* and increment *BFI_COUNTER* by 1.

If *BFI_COUNTER* is greater than or equal to *beamFailurelnstanceMaxCount,* perform the following operations:
1) if the current Serving Cell/CC has only one TRP:
   if the Serving Cell is SCell, the terminal device transmits a BFR MAC CE for the SCell (triggers a BFR for this Serving Cell);
   else:
   the terminal device initiates a Random Access procedure on the SpCell.
2) if the current Serving Cell/CC is configured with two TRPs:
   the terminal device transmits a BFR MAC CE for the TRP for which beam failure occurs (triggers a BFR for this Serving Cell).

As can be seen, the BFR method proposed in R-16 is used in this embodiment, i.e., initiate a BFR by using the BFR MAC CE when two TRPs have been configured for the serving cell.

The BFR MAC CE may carry at least one of information on the serving cell for which beam failure occurs, information on the TRP for which beam failure occurs, information on whether there is an available beam, or information on the available beam, so as to notify the network device which cells and/or TRPs have beam failure.

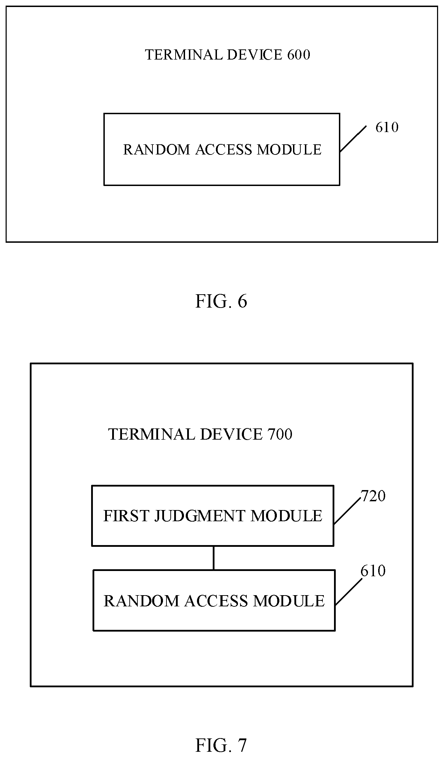

A terminal device is further proposed in embodiments of the disclosure. FIG. 6 is a schematic structural diagram of a terminal device 600 according to embodiments of the disclosure. The terminal device 600 includes a random access module 610. The random access module 610 is configured to initiate a random access procedure when beam failure occurs for a TRP in a serving cell, where the random access procedure is used for beam recovery for the TRP.

Optionally, the random access module 610 above is configured to initiate the random access procedure using a random access resource corresponding to a first TRP corresponding to the serving cell, when a random access resource for TRP BFR has been configured for the first TRP by a network device corresponding to the serving cell and beam failure occurs for the first TRP.

Optionally, the random access resource for TRP BFR is configured for at least one TRP corresponding to the serving cell by the network device.

Optionally, the random access module 610 above is configured to initiate the random access procedure using a random access resource corresponding to a first TRP corresponding to the serving cell or using a random access resource corresponding to a second TRP corresponding to the serving cell, when a random access resource for TRP BFR has been configured for the first TRP and the second TRP by a network device corresponding to the serving cell and beam failure occurs for both the first TRP and the second TRP.

Optionally, the random access module 610 above is configured to initiate a contention-based random access procedure and carry indication information in Msg3/MsgA in the contention-based random access procedure, when a random access resource for TRP BFR has been configured for a first TRP corresponding to the serving cell and a second TRP corresponding to the serving cell by a network device corresponding to the serving cell and beam failure occurs for both the first TRP and the second TRP, where the indication information indicates first TRP information and/or second TRP information.

Optionally, random access resources corresponding to different TRPs configured with different random access resources are differentiated according to one of: different random access preambles; different RACH occasions/different time-frequency resources; different configured beams; or different configured SSBs.

Optionally, the random access module 610 above is configured to perform the random access procedure for serving cell BFR using a random access resource for cell BFR, when the random access resource for cell BFR has been configured for the serving cell.

Optionally, the random access module 610 above is further configured to carry indication information in Msg3/MsgA in the random access procedure for serving cell BFR, where the indication information indicates TRP information corresponding to a network device corresponding to the serving cell.

Optionally, a random access resource for TRP BFR is not configured for the TRP corresponding to the serving cell by a network device corresponding to the serving cell.

Optionally, the random access module 610 above is configured to initiate a contention-based random access procedure and carry indication information in Msg3/MsgA in the contention-based random access procedure, where the indication information indicates TRP information corresponding to a network device corresponding to the serving cell.

Optionally, a random access resource for TRP BFR is not configured for the TRP corresponding to the serving cell by the network device corresponding to the serving cell.

Optionally, no random access resource for cell BFR is configured for the serving cell.

Optionally, the indication information above includes at least one of: serving cell information; information on the TRP for which beam failure occurs; information on whether there is an available beam; or information on the available beam.

Optionally, the information on the available beam above includes at least one of: identification of the available beam; an SSB index corresponding to the available beam; or a CSI-RS index corresponding to the available beam.

Optionally, the serving cell above includes a PCell, a PSCell, or an SCell.

Optionally, the TRP in the serving cell above is represented by a CORESET, a CORESET pool, or a reference signal set.

Optionally, the random access above includes a two-step random access or a four-step random access.

A terminal device is further proposed in embodiments of the disclosure. FIG. 7 is a schematic structural diagram of a terminal device 700 according to embodiments of the disclosure. The terminal device 700 includes a random access module 610 and a first judgment module 720, where the first judgment module 720 is configured to make a beam failure judgment based on a beam failure indication reported by a PHY layer.

It is to be understood that, the above and other operations and/or functions of the module of the terminal device according to embodiments of the disclosure are respectively intended for implementing corresponding operations of the terminal device in the method 200 illustrated in FIG. 2, which will not be repeated herein for the sake of simplicity.

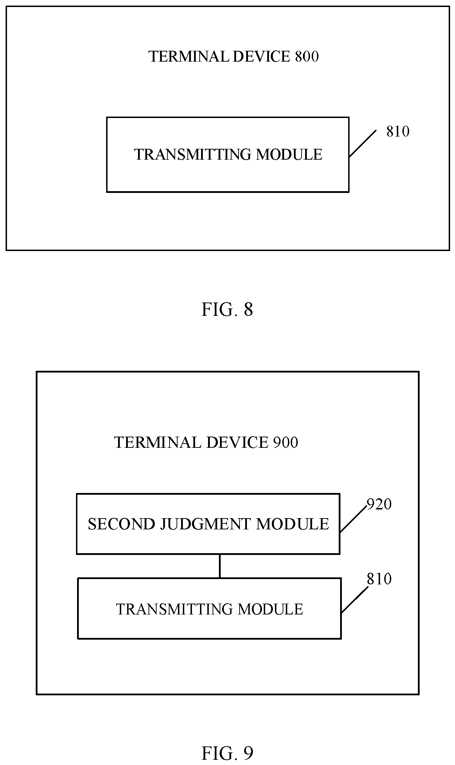

A terminal device is further proposed in embodiments of the disclosure. FIG. 8 is a schematic structural diagram of a terminal device 800 according to embodiments of the disclosure. The terminal device 800 includes a transmitting module 810. The transmitting module is configured to transmit a BFR MAC CE, when beam failure occurs for the TRP in a serving cell, where the BFR MAC CE is used for beam recovery for the TRP.

Optionally, the transmitting module 810 above is configured to transmit the BFR MAC CE for the TRP for which beam failure occurs.

Optionally, the BFR MAC CE above carries indication information, where the indication information indicates TRP information corresponding to a network device corresponding to the serving cell.

Optionally, the BFR MAC CE above includes at least one of: serving cell information; information on the TRP for which beam failure occurs; information on whether there is an available beam; or information on the available beam.

Optionally, the information on the available beam above includes at least one of: identification of the available beam; an SSB index corresponding to the available beam; or a CSI-RS index corresponding to the available beam.

Optionally, the serving cell above includes a PCell, a PSCell, or an SCell.

Optionally, the TRP in the serving cell above is represented by a CORESET, a CORESET pool, or a reference signal set.

A terminal device is further proposed in embodiments of the disclosure. FIG. 9 is a schematic structural diagram of a terminal device 900 according to embodiments of the disclosure. The terminal device 900 includes a transmitting module 810 and a second judgment module 920, where the second judgment module 920 is configured to make a beam failure judgment based on a beam failure indication reported by a PHY layer.

It is to be understood that, the above and other operations and/or functions of the module of the terminal device according to embodiments of the disclosure are respectively intended for implementing corresponding operations of the terminal device in the method 300 illustrated in FIG. 3, which will not be repeated herein for the sake of simplicity.

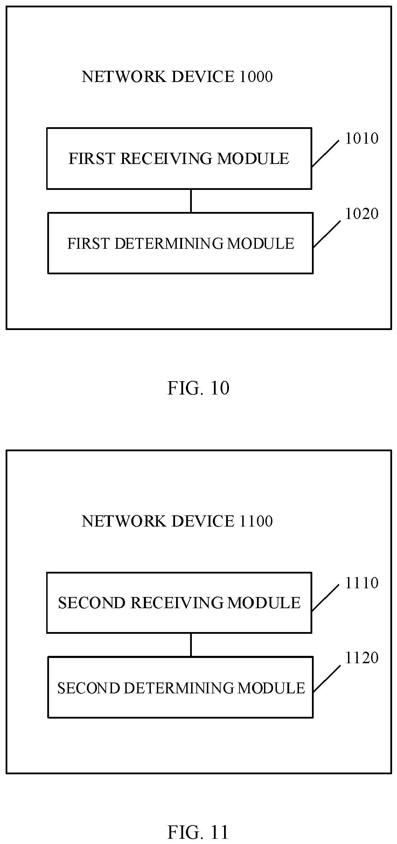

A network device is further proposed in embodiments of the disclosure. FIG. 10 is a schematic structural diagram of a network device 1000 according to embodiments of the disclosure. The network device 1000 includes a first receiving module 1010 and a first determining module 1020. The first receiving module 1010 is configured to receive a random access signal from a terminal device, where the random access signal is used for beam recovery for a TRP for which beam failure occurs in a serving cell. The first determining module 1020 is configured to determine, according to the random access signal, a serving cell and/or a TRP for which TRP beam failure occurs.

Optionally, the first determining module 1020 above is configured to determine, according to a TRP corresponding to a random access resource used by the random access signal, the TRP for which beam failure occurs.

Optionally, random access resources corresponding to different TRPs configured with different random access resources are differentiated according to one of: different random access preambles; different RACH occasions/different time-frequency resources; different configured beams; or different configured SSBs.

Optionally, the first determining module 1020 above is configured to determine, according to indication information carried in the random access signal, the serving cell and/or the TRP for which beam failure occurs, where the indication information indicates TRP information corresponding to a network device corresponding to the serving cell.

Optionally, the indication information above includes at least one of: serving cell information; information on the TRP for which beam failure occurs; information on whether there is an available beam; or information on the available beam.

Optionally, the information on the available beam above includes at least one of: identification of the available beam; an SSB index corresponding to the available beam; or a CSI-RS index corresponding to the available beam.

Optionally, the serving cell above includes a PCell, a PSCell, or an SCell.

Optionally, the TRP in the serving cell above is represented by a CORESET, a CORESET pool, or a reference signal set.

Optionally, the random access above includes a two-step random access or a four-step random access.

It is to be understood that, the above and other operations and/or functions of the module of the network device according to embodiments of the disclosure are respectively intended for implementing corresponding operations of the network device in the method 300 illustrated in FIG. 4, which will not be repeated herein for the sake of simplicity.

A network device is further proposed in embodiments of the disclosure. FIG. 11 is a schematic structural diagram of a network device 1100 according to embodiments of the disclosure. The network device 1100 includes a second receiving module 1110 and a second determining module 1120. The network device 1100 is configured to receive a BFR MAC CE from a terminal device, where the BFR MAC CE is used for beam recovery for a TRP in a serving cell for which beam failure occurs. The second determining module 1120 is configured to determine, according to the BFR MAC CE, a serving cell and/or a TRP for which TRP beam failure occurs.

Optionally, the BFR MAC CE carries indication information, where the indication information indicates TRP information corresponding to the network device corresponding to the serving cell.

Optionally, the BFR MAC CE above includes at least one of: serving cell information; information on the TRP for which beam failure occurs; information on whether there is an available beam; or information on the available beam.

Optionally, the information on the available beam above includes at least one of: identification of the available beam; an SSB index corresponding to the available beam; or a CSI-RS index corresponding to the available beam.

Optionally, the serving cell above includes a PCell, a PSCell, or an SCell.

It is to be noted that, the functions described with respect to each module (sub-module, unit, or component, etc.) of the terminal device and network device in embodiments of the disclosure can be implemented by different modules (sub-modules, units, or components, etc.) or by the same module (sub-module, unit, or component, etc.). For example, a BFR module 610 and a beam failure information indication module 720 may be different modules, or may also be the same module, both of which can implement the corresponding functions in embodiments of the disclosure. In addition, the transmitting module and the receiving module in embodiments of the disclosure can be implemented by the transceiver of the device, and part or all of the remaining modules can be implemented by the processor of the device.

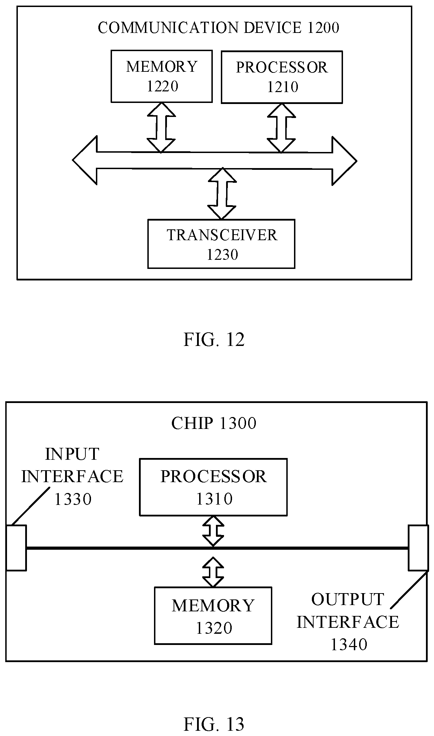

FIG. 12 is a schematic structural diagram of a communication device 1200 according to embodiments of the disclosure. The communication device 1200 illustrated in FIG. 12 includes a processor 1210. The processor 1210 can invoke and execute computer programs stored in a memory, to perform the method in embodiments of the disclosure.

Optionally, as illustrated in FIG. 12, the communication device 1200 may also include a memory 1220. The processor 1210 can invoke and execute the computer programs stored in the memory 1220, to perform the method in embodiments of the disclosure.

The memory 1220 may be a separate device independent of the processor 1210, or may be integrated into the processor 1210.

Optionally, as illustrated in FIG. 12, the communication device 1200 may further include a transceiver 1230. The processor 1210 can control the transceiver 1230 to communicate with other devices, specifically, to transmit information or data to other devices or to receive information or data transmitted by other devices.

The transceiver 1230 may include a transmitter and a receiver. The transceiver 1230 may further include an antenna, where one or more antennas can be provided.

Optionally, the communication device 1200 may be operable as the terminal device in embodiments of the disclosure, and the communication device 1200 can implement the operations performed by the terminal device in various methods in embodiments of the disclosure, which will not be repeated herein for the sake of simplicity.

Optionally, the communication device 1200 may be operable as the network device in embodiments of the disclosure, and the communication device 1200 can implement the operations performed by the network device in various methods in embodiments of the disclosure, which will not be repeated herein for the sake of simplicity.

FIG. 13 is a schematic structural diagram of a chip 1300 according to embodiments of the disclosure. The chip 1300 illustrated in FIG. 13 includes a processor 1310. The processor 1310 can invoke and execute computer programs stored in a memory to perform the method in embodiments of the disclosure.

Optionally, as illustrated in FIG. 13, the chip 1300 may further include a memory 1320. The processor 1310 can invoke and execute the computer programs stored in the memory 1320 to perform the method in embodiments of the disclosure.

The memory 1320 may be a separate device independent of the processor 1310, or may be integrated into the processor 1310.

Optionally, the chip 1300 may further include an input interface 1330. The processor 1310 can control the input interface 1330 to communicate with other devices or chips, specifically, to obtain information or data transmitted by other devices or chips.

Optionally, the chip 1300 may further include an output interface 1340. The processor 1310 can control the output interface 1340 to communicate with other devices or chips, specifically, to output information or data to other devices or chips.

Optionally, the chip is applicable to the terminal device in embodiments of the disclosure. The chip can implement the operations performed by the terminal device in various methods in embodiments of the disclosure, which will not be repeated herein for the sake of simplicity.

Optionally, the chip is applicable to the network device in embodiments of the disclosure. The chip can implement the operations performed by the network device in various methods in embodiments of the disclosure, which will not be repeated herein for the sake of simplicity.

It is to be understood that, the chip referred to in embodiments of the disclosure may also be referred to as a system-on-a-chip (SOC).

The processor mentioned above may be a general-purpose processor, a digital signal processor (DSP), a field programmable gate array (FPGA), an application specific integrated circuit (ASIC), or other programmable logic devices, transistor logic devices, discrete hardware components. The general-purpose processor may be a microprocessor, or the processor may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or flash memory. The volatile memory can be a random access memory (RAM).

It is to be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM), etc. In other words, the memory in embodiments of the disclosure is intended to include, but is not limited to, these and any other suitable types of memory.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It is to be understood that, in various embodiments of the disclosure, the magnitude of a sequence number of each of the foregoing processes does not mean an execution order, and an execution order of each process should be determined according to a function and an internal logic of the process, which shall not constitute any limitation to an implementation process of embodiments of the disclosure.

It will be evident to those skilled in the art that, for the sake of convenience and brevity, in terms of the working processes of the foregoing systems, apparatuses, and units, reference can be made to the corresponding processes of the above method embodiments, which will not be elaborated again herein.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A beam failure recovery (BFR) method, comprising:
initiating, by a terminal device, a random access procedure, when beam failure occurs for a transmit receive point (TRP) in a serving cell, wherein the random access procedure is used for beam recovery for the TRP.

2. The method of claim 1, wherein initiating, by the terminal device, the random access procedure comprises:
initiating, by the terminal device, the random access procedure using a random access resource corresponding to a first TRP corresponding to the serving cell, when a random access resource for a BFR for the TRP (TRP BFR) has been configured for the first TRP by a network device corresponding to the serving cell and beam failure occurs for the first TRP.

3. The method of claim 2, wherein
the random access resource for TRP BFR is configured for at least one TRP corresponding to the serving cell by the network device.

4. The method of claim 1, wherein initiating, by the terminal device, the random access procedure comprises:
initiating, by the terminal device, the random access procedure using a random access resource corresponding to a first TRP corresponding to the serving cell or using a random access resource corresponding to a second TRP corresponding to the serving cell, when a random access resource for TRP BFR has been configured for the first TRP and the second TRP by a network device corresponding to the serving cell and beam failure occurs for both the first TRP and the second TRP.

5. The method of claim 1, wherein initiating, by the terminal device, the random access procedure comprises:
initiating, by the terminal device, a contention-based random access procedure, and carrying, by the terminal device, indication information in Msg3/MsgA in the contention-based random access procedure, when a random access resource for TRP BFR has been configured for a first TRP and a second TRP corresponding to the serving cell by a network device corresponding to the serving cell and beam failure occurs for both the first TRP and the second TRP, wherein the indication information indicates first TRP information and/or second TRP information.

6. The method of any of claims 2 to 5, wherein random access resources corresponding to different TRPs configured with different random access resources are differentiated according to one of:
different random access preambles;
different random access channel (RACH) occasions/different time-frequency resources;
different configured beams; or
different configured synchronization signal blocks (SSBs).

7. The method of claim 1, wherein initiating, by the terminal device, the random access procedure comprises:
performing, by the terminal device, the random access procedure for a BFR for the serving cell (serving cell BFR) using a random access resource for cell BFR, when the random access resource for cell BFR is configured for the serving cell.

8. The method of claim 7, further comprising:
carrying, by the terminal device, indication information in Msg3/MsgA in the random access procedure for the serving cell BFR, wherein the indication information indicates TRP information corresponding to a network device corresponding to the serving cell.

9. The method of claim 7 or 8, further comprising:
a random access resource for TRP BFR being not configured for the TRP corresponding to the serving cell by a network device corresponding to the serving cell.

10. The method of claim 1, wherein initiating, by the terminal device, the random access procedure comprises:
initiating, by the terminal device, a contention-based random access procedure, and carrying, by the terminal device, indication information in Msg3/MsgA in the contention-based random access procedure, wherein the indication information indicates TRP information corresponding to a network device corresponding to the serving cell.

11. The method of claim 10, further comprising:
a random access resource for TRP BFR being not configured for the TRP corresponding to the serving cell by the network device corresponding to the serving cell.

12. The method of claim 10 or 11, further comprising:
no random access resource for cell BFR being configured for the serving cell.

13. The method of claim 5, 8, 10, 11, or 12, wherein the indication information comprises at least one of:
serving cell information;
information on the TRP for which beam failure occurs;
information on whether there is an available beam; or
information on the available beam.

14. The method of claim 13, wherein the information on the available beam comprises at least one of:
identification of the available beam;
an SSB index corresponding to the available beam; or
a channel state information-reference signal (CSI-RS) index corresponding to the available beam.

15. The method of any of claims 1 to 14, wherein the serving cell comprises a primary cell (PCell), a primary secondary cell (PSCell), or a secondary cell (SCell).

16. The method of any of claims 1 to 15, wherein the TRP in the serving cell is represented by a control resource set (CORESET), a CORESET pool, or a reference signal set.

17. The method of any of claims 1 to 16, wherein a random access comprises a two-step random access or a four-step random access.

18. The method of any of claims 1 to 17, further comprising:
making, by the terminal device, a beam failure judgment based on a beam failure indication reported by a physical layer.

19. A beam failure recovery (BFR) method, comprising:
transmitting, by a terminal device, a BFR media access control (MAC) control element (CE), when beam failure occurs for a transmit receive point (TRP) in a serving cell, wherein the BFR MAC CE is used for beam recovery for the TRP.

20. The method of claim 19, wherein transmitting, by the terminal device, the BFR MAC CE comprises:
transmitting, by the terminal device, the BFR MAC CE for the TRP for which beam failure occurs.

21. The method of claim 20, wherein the BFR MAC CE carries indication information, the indication information indicating TRP information corresponding to a network device corresponding to the serving cell.

22. The method of any of claims 19 to 21, wherein the BFR MAC CE comprises at least one of:
serving cell information;
information on the TRP for which beam failure occurs;
information on whether there is an available beam; or
information on the available beam.

23. The method of claim 22, wherein the information on the available beam comprises at least one of:
identification of the available beam;
an SSB index corresponding to the available beam; or
a channel state information-reference signal (CSI-RS) index corresponding to the available beam.

24. The method of any of claims 19 to 23, wherein the serving cell comprises a primary cell (PCell), a primary secondary cell (PSCell), or a secondary cell (SCell).

25. The method of any of claims 19 to 24, wherein the TRP in the serving cell is represented by a control resource set (CORESET), a CORESET pool, or a reference signal set.

26. The method of any of claims 19 to 25, further comprising:
making, by the terminal device, a beam failure judgment based on a beam failure indication reported by a physical layer.

27. A beam failure recovery (BFR) method, comprising:
receiving, by a network device, a random access signal from a terminal device, wherein the random access signal is used for beam recovery for a transmit receive point (TRP) in a serving cell for which beam failure occurs; and
determining, according to the random access signal, a serving cell and/or a TRP for which TRP beam failure occurs.

28. The method of claim 27, wherein determining, according to the random access signal, the TRP for which beam failure occurs comprises:
determining, according to a TRP corresponding to a random access resource used by the random access signal, the TRP for which beam failure occurs.

29. The method of claim 28, wherein random access resources corresponding to different TRPs configured with different random access resources are differentiated according to one of:
different random access preambles;
different random access channel (RACH) occasions/different time-frequency resources;
different configured beams; or
different configured synchronization signal blocks (SSBs).

30. The method of claim 27, wherein determining, according to the random access signal, the serving cell and/or the TRP for which beam failure occurs comprises:
determining, according to indication information carried in the random access signal, the serving cell and/or the TRP for which beam failure occurs, wherein the indication information indicates TRP information corresponding to a network device corresponding to the serving cell.

31. The method of claim 30, wherein the indication information comprises at least one of:
serving cell information;
information on the TRP for which beam failure occurs;
information on whether there is an available beam; or
information on the available beam.

32. The method of claim 31, wherein the information on the available beam comprises at least one of:
identification of the available beam;
an SSB index corresponding to the available beam; or
a channel state information-reference signal (CSI-RS) index corresponding to the available beam.

33. The method of any of claims 27 to 32, wherein the serving cell comprises a primary cell (PCell), a primary secondary cell (PSCell), or a secondary cell (SCell).

34. The method of any of claims 27 to 33, wherein the TRP in the serving cell is represented by a control resource set (CORESET), a CORESET pool, or a reference signal set

35. The method of any of claims 27 to 34, wherein a random access comprises a two-step random access or a four-step random access.

36. A beam failure recovery (BFR) method, comprising:
receiving, by a network device, a BFR media access control (MAC) control element (CE) from a terminal device, wherein the BFR MAC CE is used for beam recovery for a transmit receive point (TRP) in a serving cell for which beam failure occurs; and
determining, according to the BFR MAC CE, a serving cell and/or a TRP for which TRP beam failure occurs.

37. The method of claim 36, wherein the BFR MAC CE carries indication information, the indication information indicating TRP information corresponding to the network device corresponding to the serving cell.

38. The method of claim 36 or 37, wherein the BFR MAC CE comprises at least one of:
serving cell information;
information on the TRP for which beam failure occurs;
information on whether there is an available beam; or
information on the available beam.

39. The method of claim 38, wherein the information on the available beam comprises at least one of:
identification of the available beam;
an SSB index corresponding to the available beam; or
a channel state information-reference signal (CSI-RS) index corresponding to the available beam.

40. The method of any of claims 36 to 39, wherein the serving cell comprises a primary cell (PCell), a primary secondary cell (PSCell), or a secondary cell (SCell).

41. The method of any of claims 36 to 40, wherein the TRP in the serving cell is represented by a control resource set (CORESET), a CORESET pool, or a reference signal set.

42. A terminal device, comprising:
a random access module configured to initiate a random access procedure when beam failure occurs for a transmit receive point (TRP) in a serving cell, wherein the random access procedure is used for beam recovery for the TRP.

43. The terminal device of claim 42, wherein the random access module is configured to:
initiate the random access procedure using a random access resource corresponding to a first TRP corresponding to the serving cell, when a random access resource for TRP beam failure recovery (BFR) has been configured for the first TRP by a network device corresponding to the serving cell and beam failure occurs for the first TRP.

44. The terminal device of claim 43, wherein
the random access resource for TRP BFR is configured for at least one TRP corresponding to the serving cell by the network device.

45. The terminal device of claim 42, wherein the random access module is configured to:
initiate the random access procedure using a random access resource corresponding to a first TRP corresponding to the serving cell or using a random access resource corresponding to a second TRP corresponding to the serving cell, when a random access resource for TRP BFR has been configured for the first TRP and the second TRP by a network device corresponding to the serving cell and beam failure occurs for both the first TRP and the second TRP.

46. The terminal device of claim 42, wherein the random access module is configured to:
initiate a contention-based random access procedure and carry indication information in Msg3/MsgA in the contention-based random access procedure, when a random access resource for TRP BFR has been configured for a first TRP corresponding to the serving cell and a second TRP corresponding to the serving cell by a network device corresponding to the serving cell and beam failure occurs for both the first TRP and the second TRP, wherein the indication information indicates first TRP information and/or second TRP information.

47. The terminal device of any of claims 43 to 46, wherein random access resources corresponding to different TRPs configured with different random access resources are differentiated according to one of:
different random access preambles;
different random access channel (RACH) occasions/different time-frequency resources;
different configured beams; or
different configured synchronization signal blocks (SSBs).

48. The terminal device of claim 42, wherein the random access module is configured to:
perform the random access procedure for a BFR for the serving cell (serving cell BFR) using a random access resource for cell BFR, when the random access resource for cell BFR is configured for the serving cell.

49. The terminal device of claim 48, wherein the random access module is further configured to:
carry indication information in Msg3/MsgA in the random access procedure for the serving cell BFR, wherein the indication information indicates TRP information corresponding to a network device corresponding to the serving cell.

50. The terminal device of claim 48 or 49, wherein a random access resource for TRP BFR is not configured for the TRP corresponding to the serving cell by a network device corresponding to the serving cell.

51. The terminal device of claim 42, wherein the random access module is configured to:
initiate a contention-based random access procedure and carry indication information in Msg3/MsgA in the contention-based random access procedure, wherein the indication information indicates TRP information corresponding to a network device corresponding to the serving cell.

52. The terminal device of claim 51, wherein a random access resource for TRP BFR is not configured for the TRP corresponding to the serving cell by the network device corresponding to the serving cell.

53. The terminal device of claim 51 or 52, wherein no random access resource for cell BFR is configured for the serving cell.

54. The terminal device of claim 46, 49, 51, 52, or 53, wherein the indication information comprises at least one of:
serving cell information;
information on the TRP for which beam failure occurs;
information on whether there is an available beam; or
information on the available beam.

55. The terminal device of claim 54, wherein the information on the available beam comprises at least one of:
identification of the available beam;
an SSB index corresponding to the available beam; or
a channel state information-reference signal (CSI-RS) index corresponding to the available beam.

56. The terminal device of any of claims 42 to 55, wherein the serving cell comprises a primary cell (PCell), a primary secondary cell (PSCell), or a secondary cell (SCell).

57. The terminal device of any of claims 42 to 56, wherein the TRP in the serving cell is represented by a control resource set (CORESET), a CORESET pool, or a reference signal set.

58. The terminal device of any of claims 42 to 57, wherein a random access comprises a two-step random access or a four-step random access.

59. The terminal device of any of claims 42 to 58, further comprising:
a first judgment module configured to make a beam failure judgment based on a beam failure indication reported by a physical layer.

60. A terminal device, comprising:
a transmitting module configured to transmit a beam failure recovery (BFR) media access control (MAC) control element (CE), when beam failure occurs for a transmit receive point (TRP) in a serving cell, wherein the BFR MAC CE is used for beam recovery for the TRP.

61. The terminal device of claim 60, wherein the transmitting module is configured to transmit the BFR MAC CE for the TRP for which beam failure occurs.

62. The terminal device of claim 61, wherein the BFR MAC CE carries indication information, the indication information indicating TRP information corresponding to a network device corresponding to the serving cell.

63. The terminal device of any of claims 60 to 62, wherein the BFR MAC CE comprises at least one of:
serving cell information;
information on the TRP for which beam failure occurs;
information on whether there is an available beam; or
information on the available beam.

64. The terminal device of claim 63, wherein the information on the available beam comprises at least one of:
identification of the available beam;
an SSB index corresponding to the available beam; or
a channel state information-reference signal (CSI-RS) index corresponding to the available beam.

65. The terminal device of any of claims 60 to 64, wherein the serving cell comprises a primary cell (PCell), a primary secondary cell (PSCell), or a secondary cell (SCell).

66. The terminal device of any of claims 60 to 65, wherein the TRP in the serving cell is represented by a control resource set (CORESET), a CORESET pool, or a reference signal set.

67. The terminal device of any of claims 60 to 66, further comprising:
a second judgment module configured to make a beam failure judgment based on a beam failure indication reported by a physical layer.

68. A network device, comprising:
a first receiving module configured to receive a random access signal from a terminal device, wherein the random access signal is used for beam recovery for a transmit receive point (TRP) in a serving cell for which beam failure occurs; and
a first determining module configured to determine, according to the random access signal, a serving cell and/or a TRP for which TRP beam failure occurs.

69. The network device of claim 68, wherein the first determining module is configured to determine, according to a TRP corresponding to a random access resource used by the random access signal, the TRP for which beam failure occurs.

70. The network device of claim 69, wherein random access resources corresponding to different TRPs configured with different random access resources are differentiated according to one of:
different random access preambles;
different random access channel (RACH) occasions/different time-frequency resources;
different configured beams; or
different configured synchronization signal blocks (SSBs).

71. The network device of claim 68, wherein the first determining module is configured to determine, according to indication information carried in the random access signal, the serving cell and/or the TRP for which beam failure occurs, wherein the indication information indicates TRP information corresponding to a network device corresponding to the serving cell.

72. The network device of claim 71, wherein the indication information comprises at least one of:
serving cell information;
information on the TRP for which beam failure occurs;
information on whether there is an available beam; or
information on the available beam.

73. The network device of claim 72, wherein the information on the available beam comprises at least one of:
identification of the available beam;
an SSB index corresponding to the available beam; or
a channel state information-reference signal (CSI-RS) index corresponding to the available beam.

74. The network device of any of claims 68 to 73, wherein the serving cell comprises a primary cell (PCell), a primary secondary cell (PSCell), or a secondary cell (SCell).

75. The network device of any of claims 68 to 74, wherein the TRP in the serving cell is represented by a control resource set (CORESET), a CORESET pool, or a reference signal set.

76. The network device of any of claims 68 to 75, wherein a random access comprises a two-step random access or a four-step random access.

77. A network device, comprising:
a second receiving module configured to receive a beam failure recovery (BFR) media access control (MAC) control element (CE) from a terminal device, wherein the BFR MAC CE is used for beam recovery for a transmit receive point (TRP) in a serving cell for which beam failure occurs; and
a second determining module configured to determine, according to the BFR MAC CE, a serving cell and/or a TRP for which TRP beam failure occurs.

78. The network device of claim 77, wherein the BFR MAC CE carries indication information, the indication information indicating TRP information corresponding to the network device corresponding to the serving cell.

79. The network device of claim 77 or 78, wherein the BFR MAC CE comprises at least one of:
serving cell information;
information on the TRP for which beam failure occurs;
information on whether there is an available beam; or
information on the available beam.

80. The network device of claim 79, wherein the information on the available beam comprises at least one of:
identification of the available beam;
an SSB index corresponding to the available beam; or
a channel state information-reference signal (CSI-RS) index corresponding to the available beam.

81. The network device of any of claims 77 to 80, wherein the serving cell comprises a primary cell (PCell), a primary secondary cell (PSCell), or a secondary cell (SCell).

82. The network device of any of claims 77 to 81, wherein the TRP in the serving cell is represented by a control resource set (CORESET), a CORESET pool, or a reference signal set.

83. A terminal device, comprising a processor and a memory, wherein the memory is configured to store computer programs, and the processor is configured to invoke and execute the computer programs stored in the memory, to perform the method of any of claims 1 to 26.

84. A network device, comprising a processor and a memory, wherein the memory is configured to store computer programs, and the processor is configured to invoke and execute the computer programs stored in the memory, to perform the method of any of claims 27 to 41.

85. A chip, comprising:
a processor configured to invoke and execute computer programs stored in a memory, to cause a device equipped with the chip to perform the method of any of claims 1 to 26.

86. A chip, comprising:
a processor configured to invoke and execute computer programs stored in a memory, to cause a device equipped with the chip to perform the method of any of claims 27 to 41.

87. A computer-readable storage medium configured to store computer programs which are operable with a computer to perform the method of any of claims 1 to 26.

88. A computer-readable storage medium configured to store computer programs which are operable with a computer to perform the method of any of claims 27 to 41.

89. A computer program product, comprising computer program instructions which are operable with a computer to perform the method of any of claims 1 to 26.

90. A computer program product, comprising computer program instructions which are operable with a computer to perform the method of any of claims 27 to 41.

91. A computer program being operable with a computer to perform the method of any of claims 1 to 26.

92. A computer program being operable with a computer to perform the method of any of claims 27 to 41.
